# EUROPEAN PATENT SPECIFICATION

(11) **EP 3 647 953 B1**
(45) Date of publication and mention of the grant of the patent: **24.08.2022**
(21) Application number: 19201435.5
(22) Date of filing: 04.10.2019
(51) Int. Cl.: G06F 11/14

(54) **SYSTEM AND METHOD FOR DATA BACKUP IN MIXED DISK ENVIRONMENT**
SYSTEM UND VERFAHREN ZUR DATENSICHERUNG IN EINER MISCHPLATTENUMGEBUNG
SYSTÈME ET PROCÉDÉ DE SAUVEGARDE DE DONNÉES DANS UN ENVIRONNEMENT DE DISQUE MIXTE

(30) Priority: 26.10.2018 US 201816172617
(43) Date of publication of application: 06.05.2020
(73) Proprietor: EMC IP Holding Company LLC, Hopkinton, MA 01748 (US)
(72) Inventor: Srinivasan, Sharath Talkad, 560043 Bengaluru , Karnataka (IN); Vithalkar, Suraj Dayanand, 560064 Bangalore Karnataka (IN)
(74) Representative: Hoffmann Eitle

(56) References cited:
- US-A1- 2010 011 178
- US-A1- 2010 257 326
- US-A1- 2013 262 801
- US-A1- 2014 244 950
- US-A1- 2015 378 636
- US-A1- 2018 032 409
- US-B1- 8 346 727

## Description

### BACKGROUND

Computing devices may generate data during their operation. For example, applications hosted by the computing devices may generate data used by the applications to perform their functions. Such data may be stored in persistent storage of the computing devices. The persistent storage may be a hard disk drive.

US 2010/257326 A1 describes logical volume management for a storage subsystem in a virtual machine environment. A storage system comprises a storage subsystem including a processor, a memory, one or more virtual disks, and one or more logical disks each corresponding to a physical storage area in the storage subsystem; and a host computer connected with the storage subsystem via a network, the host computer including a plurality of virtual machines running thereon, the virtual machines each being connected to at least one of the virtual disks or logical disks in the storage subsystem. In the storage subsystem, abstract disks each represent one of the virtual disks or logical disks. An abstract disk management table is stored in the memory of the storage subsystem to manage a relationship between the abstract disks and the one or more virtual disks and between the abstract disks and the one or more logical disks.US 2013/262801 A1 describes software, firmware, and systems that create and use a nonproduction copy of a virtual machine for reverting or restoring the virtual machine. The virtual machine is associated with an external storage device via a logical mapping. A snapshot is taken of a virtual disk associated with the virtual machine to create a snapshot copy of the virtual disk. A snapshot is taken of at least a portion of the mapped external storage device to create a snapshot copy of the mapped external storage device. The snapshot copy of the virtual disk is associated with the snapshot copy of the mapped external storage device. The snapshot copies can then be used to either revert or restore the virtual machine.

US 2014/244950 A1 describes a system and method for cloning a live virtual machine (i.e., a virtual machine that is running). A computer system prepares an area of a storage device for a clone of a live virtual machine, and a transaction is then executed that comprises: creating the clone of the live virtual machine based on a live snapshot of the live virtual machine, copying the clone to the area of the storage device, and mirroring a change to a virtual disk of the live virtual machine that occurs after the live snapshot is created, wherein the mirroring is via one or more write operations to the virtual disk and to a replica of the virtual disk associated with the clone.

US 2015/378636 A1 describes that to create a backup of a live (running) virtual machine, a backup agent may take a snapshot of the virtual machine, backup the virtual machine from the snapshot disk, and delete the snapshot. Deleting the snapshot initiates a snapshot consolidation process where delta disks of the virtual machine are collapsed. A virtual disk layer sets up a mirror driver between a current virtual disk and a target virtual disk. Data sectors of the delta disk are copied over to the target virtual disk in a single pass, while the mirror driver mirrors write request for the current virtual disk to the target virtual disk.

US 8,346,727 B1 describes the generation of a so-called optimized backup image of a virtual machine. The virtual machine is associated with a virtual disk. The virtual disk includes one or more virtual volumes. Generating the optimized backup image includes excluding one or more invalid sectors of the virtual disk from the optimized backup image.

US 2010/011178 A1 describes backup systems and methods for a virtual computing environment. Certain examples described in that document include a system having a backup management server that communicates with a host server having at least one virtual machine. The management server coordinates with the host server to perform backup copies of entire virtual machine disks from outside the guest operating system of the virtual machine. In certain examples described in that document, such backup systems further utilize a volume shadow copy service executing on the host server to quiesce virtual machine applications to put data in a consistent state to be backed up. The backup system then utilizes hypervisor snapshot capabilities of the host server to record intended changes to the virtual machine disk files while such files are being copied (e.g., backed up) by the host server. It is said that such recorded changes can be later committed to the virtual machine disk files once the backup operation has completed.

US 2018/032409 A1 describes that backup of application data associated with an application executing in a virtual machine managed by a hypervisor is performed. Backup of the application data includes retrieving a Logical Unit Number, LUN, identification, ID, used by the application to store the application data in a storage volume. Backup of the application data also includes performing a virtual storage resolution for the LUN ID to determine whether the application data is stored in the storage volume identified by the LUN ID based on a first virtual mapping or a physical mapping. Backup also includes storing in metadata for the backup the LUN ID and whether the LUN ID is based on the first virtual mapping or the physical mapping. Backup includes creating a backup of the application data stored in the storage volume. Application data can subsequently be restored based on the application data that is backed up.

### SUMMARY

According to the present invention, there is provided a method for managing virtual machines hosted on a production host as set out in Claim 1.

According to the present invention, there is also provided a production host configured to host virtual machines as set out in Claim 8.

According to the present invention, there is also provided a computer program as set out in Claim 9.

### BRIEF DESCRIPTION OF DRAWINGS

Certain embodiments of the invention will be described with reference to the accompanying drawings. However, the accompanying drawings illustrate only certain aspects or implementations of the invention by way of example and are not meant to limit the scope of the claims.
FIG. 1 shows a diagram of a system in accordance with one or more embodiments of the invention.
FIG. 2 shows a diagram of an example production host in accordance with one or more embodiments of the invention.
FIG. 3 shows a diagram of an example remote agent in accordance with one or more embodiments of the invention.
FIG. 4.1 shows a first relationship diagram illustrating a relationship between a physical disk and a mirror virtual disk in accordance with one or more embodiments of the invention.
FIG. 4.2 shows a second relationship diagram illustrating relationships between a virtual machine and different types of disk in accordance with one or more embodiments of the invention.
FIG. 5.1 shows a flowchart of a method of generating a backup for a virtual machine in accordance with one or more embodiments of the invention.
FIG. 5.2 shows a flowchart of a method of generating a mirror virtual disk in accordance with one or more embodiments of the invention.
FIG. 5.3 shows a continuation of the flowchart of FIG. 5.2.
FIG. 6.1 shows a diagram of an example system at a first point in time.
FIG. 6.2 shows a diagram of the example system of FIG. 6.1 at a second point in time.
FIG. 6.3 shows a diagram of the example system of FIG. 6.1 at a third point in time.
FIG. 6.4 shows a diagram of the example system of FIG. 6.1 at a fourth point in time.
FIG. 7 shows a diagram of a computing device in accordance with one or more embodiments of the invention.

### DETAILED DESCRIPTION

In one aspect, a production host that hosts virtual machines described herein includes a physical disk utilized by a virtual machine of the virtual machines and a backup agent that obtains a backup generation request; makes a first determination that the backup generation request impacts the physical disk; in response to the first determination: generates a mirror virtual disk for the physical disk; generates a backup of the mirror virtual disk as a backup of the physical disk; and stores the backup of the mirror virtual disk in backup storage.

In one aspect, a method for managing virtual machines described herein includes obtaining a backup generation request for a virtual machine of the virtual machines; making a first determination that the backup generation request impacts a physical disk utilized by the virtual machine; in response to the first determination: generating a mirror virtual disk for the physical disk; generating a backup of the mirror virtual disk as a backup of the physical disk; and storing the backup of the mirror virtual disk in backup storage.

In one aspect, a computer program described herein comprises computer readable program code which, when executed by a computer processor, causes the computer processor to perform a method for managing virtual machines, the method includes obtaining a backup generation request for a virtual machine of the virtual machines; making a first determination that the backup generation request impacts a physical disk utilized by the virtual machine; in response to the first determination: generating a mirror virtual disk for the physical disk; generating a backup of the mirror virtual disk as a backup of the physical disk; and storing the backup of the mirror virtual disk in backup storage. The computer program may be carried by a signal or a non-transitory computer readable medium.

Specific embodiments will now be described with reference to the accompanying figures. In the following description, numerous details are set forth as examples of the invention. It will be understood by those skilled in the art that one or more embodiments of the present invention may be practiced without these specific details and that numerous variations or modifications may be possible without departing from the scope of the invention. Certain details known to those of ordinary skill in the art are omitted to avoid obscuring the description.

In the following description of the figures, any component described with regard to a figure, in various embodiments of the invention, may be equivalent to one or more like-named components described with regard to any other figure. For brevity, descriptions of these components will not be repeated with regard to each figure. Thus, each and every embodiment of the components of each figure is incorporated by reference and assumed to be optionally present within every other figure having one or more like-named components. Additionally, in accordance with various embodiments of the invention, any description of the components of a figure is to be interpreted as an optional embodiment, which may be implemented in addition to, in conjunction with, or in place of the embodiments described with regard to a corresponding like-named component in any other figure.

In general, embodiments of the invention relate to systems, devices, and methods for managing virtual machines in a distributed environment. More specifically, embodiments of the invention may provide a method for generating backups of virtual machines regardless of which type of disk virtual machines utilize.

In one or more embodiments of the invention, virtual machines may utilize physical disks or virtual disks. For example, a physical disk may be utilized by virtual machine when the physical disk is mapped using a raw device mapping (RDM). In such a scenario, a volume may present itself as a virtualized disk to the virtual machine but may be mapped to a physical device. When mapped to a physical device, reads and writes to the volume may be directed to the mapped physical device.

An entity hosting virtual machines includes functionality to identify whether a volume is a virtualized disk or is, in fact, a physical disk. When the entity hosting the virtual machines identifies that the volume is a physical disk, the entity takes action to ensure that backups of the physical disk are generated. The entity takes action by generating a mirror virtual disk of the physical disk. A mirror virtual disk is a virtual disk that includes the same data as the physical disk but is implemented as a logical disk. By doing so, the entity generates backups of the virtual machines using the mirror virtual disk.

In one or more embodiments of the invention, the mirror virtual disks are implemented as thin virtual disks. Then virtual disk may only be allocated sufficient storage resources to host the actual data stored in a corresponding physical disk. In other words, the virtual disk may be of a smaller size than a physical disk and may only be allocated a minimum quantity of storage resources sufficient to store the data stored in the physical disk.

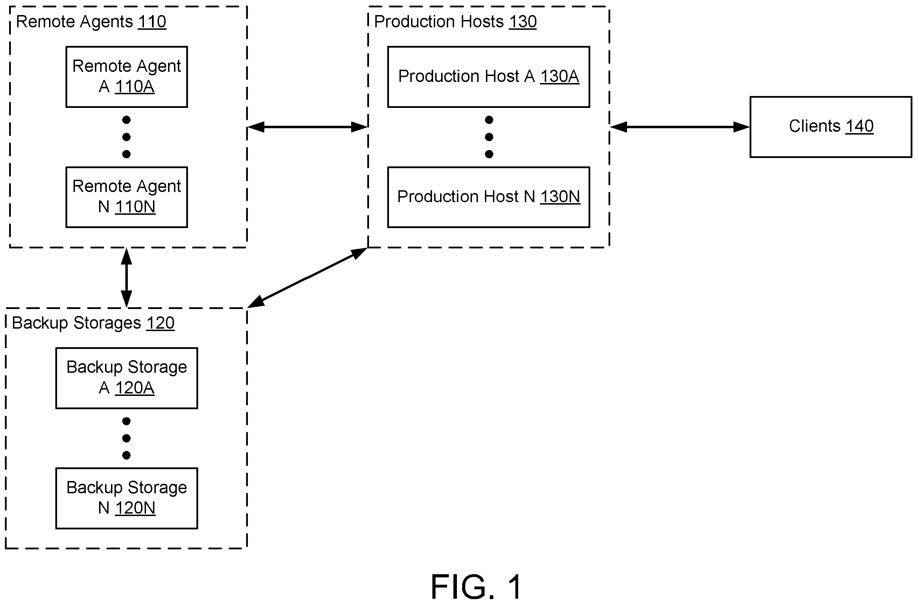

FIG. 1 shows an example system in accordance with one or more embodiments of the invention. The system may include clients (140) that obtain services from virtual machines hosted by production hosts (130). For example, the production hosts (130) may host virtual machines that host applications. The clients (140) may utilize application services of the applications. The applications may be, for example, database applications, electronic communication applications, file storage applications, or any other type of application that may provide services to the clients (140). By utilizing such services, data that is relevant to the clients (140) may be stored in the production hosts (130).

To improve the likelihood that data stored in the production hosts (130) is available for future use, backups of the production hosts (130) are generated and stored in the backup storages (120). A backup of one of the production hosts (130) may include data that may be used to restore the production host, or an entity hosted by the production host, to a previous state.

The system may also include remote agents (110) that provide backup services to the production hosts (130). The backup services may include generating and storing backups for the production hosts (130) in backup storages (120). The backup services may also include performing restorations of the production hosts (130) using backups stored in the backup storages (120). Performing restoration of a production host (*e.g.,* 130A, 130N) they return the production host, or an entity hosted by the production host, to a previous state.

The components of the system illustrated in FIG. 1 may be operably connected to each other and/or operably connected to other entities (not shown) via any combination of wired and/or wireless networks. Each component of the system illustrated in FIG. 1 is discussed below.

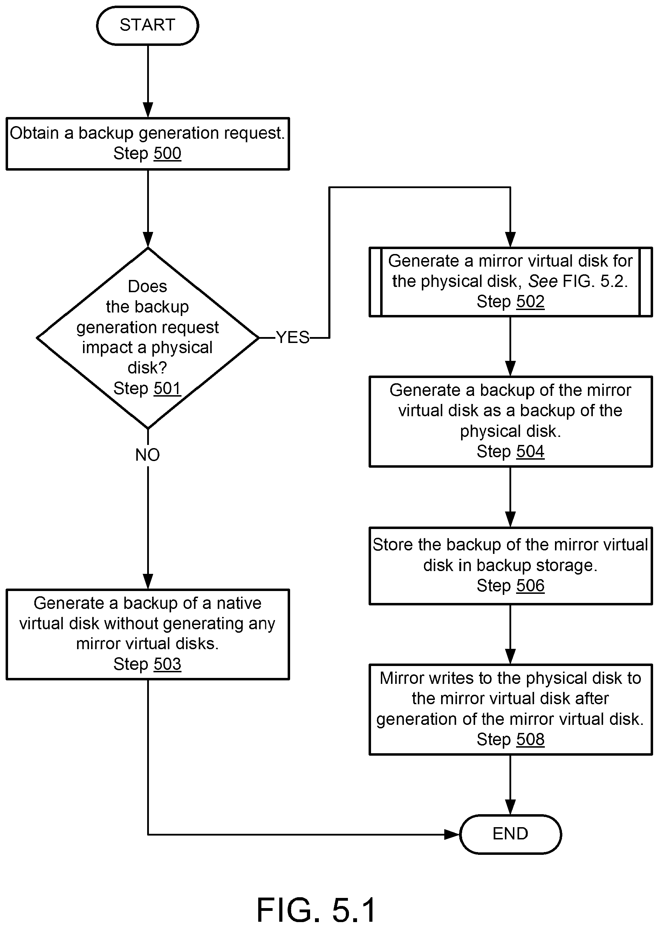

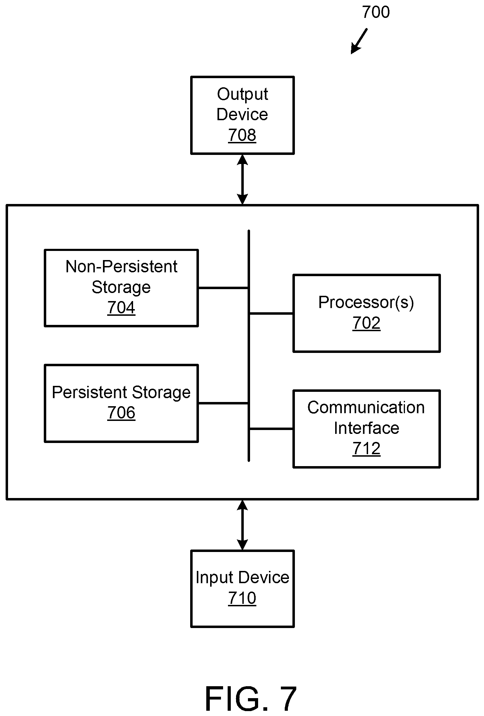

The clients (140) may be computing devices. The computing devices may be, for example, mobile phones, tablet computers, laptop computers, desktop computers, servers, or cloud resources. The computing devices may include one or more processors, memory *(e.g.,* random access memory), and persistent storage *(e.g.,* disk drives, solid state drives, etc.). The persistent storage may store computer instructions, e.g., computer code, that when executed by the processor(s) of the computing device cause the computing device to perform the functions described in this application and/or all, or portion, of the methods illustrated in FIGs. 5.1 - 5.3. The clients (140) may be other types of computing devices without departing from the invention. For additional details regarding computing devices, refer to FIG. 7.

The clients (140) may be logical devices without departing from the invention. For example, the clients (140) may be virtual machines that utilize computing resources of any number of physical computing devices to provide the functionality of the clients (140).

In one or more embodiments of the invention, the clients (140) utilize application services provided by production hosts (130). For example, the clients (140) may utilize database services, electronic communication services, file storage services, or any other type of computer implemented service provided by applications hosted by the production hosts (130). By utilizing the aforementioned services, data that is relevant to the clients (140) may be stored as part of application data of the applications hosted by the production hosts (130).

For example, consider a scenario in which a client utilizes file storage services provided by an application of the production hosts (130) by uploading an image to an application hosted by the production hosts (130). In response to receiving the uploaded image, the application may store a copy of the image locally in the production hosts (130). At a future point in time, the client that uploaded the image or another entity may desire to retrieve a copy of the image from the production hosts (130) and thereby render data, *i.e.,* the copy of the image sort of the production hosts (130), stored in the production hosts (130) to be relevant to the clients (140). One or more embodiments of the invention may improve the likelihood that data that is relevant to the clients (140) and stored in the production hosts (130) is retrievable from the production hosts (130) at future points in time. Embodiments of the invention may provide such functionality by generating and storing backups of the production hosts, or portions of the production hosts, in backup storages (120).

In one or more embodiments of the invention, the production hosts (130) are computing devices. The computing devices may be, for example, mobile phones, tablet computers, laptop computers, desktop computers, servers, distributed computing systems, or a cloud resource. The computing devices may include one or more processors, memory *(e.g.,* random access memory), and persistent storage *(e.g.,* disk drives, solid state drives, etc.). The persistent storage may store computer instructions, e.g., computer code, that when executed by the processor(s) of the computing device cause the computing device to perform the functions described in this application and/or all, or portion, of the methods illustrated in FIGs. 5.1 - 5.3. The production hosts (130) may be other types of computing devices without departing from the invention. For additional details regarding computing devices, refer to FIG. 7.

In one or more embodiments of the invention, the production hosts (130) are distributed computing devices. As used herein, a distributed computing device refers to functionality provided by a logical device that utilizes the computing resources of one or more separate and/or distinct physical computing devices. For example, in one or more embodiments of the invention, the production hosts (130) may be distributed devices that include components distributed across any number of separate and/or distinct computing devices. In such a scenario, the functionality of the production hosts (130) may be performed by multiple, different computing devices without departing from the invention.

A system in accordance with one or more embodiments of the invention may include any number of production hosts *(e.g.,* 130A, 130N) without departing from the invention. For example, a system may include a single production host *(e.g.,* 130A) or multiple production hosts *(e.g.,* 130A, 130N).

In one or more embodiments of the invention, the production hosts (130) provide services to the clients (140). The services may be any type of computer implemented service such as, for example, database services, electronic communication services, data storage services, and/or instant messaging services. When providing such services to the clients (140), data that is relevant to the clients (140) may be stored in persistent storage of the production hosts (130).

In one or more embodiments of the invention, the production hosts (130) perform backup services such as, for example, storing backups in backup storages (120). By storing backups in the backup storages (120), copies of data stored in persistent storage of the production hosts (130) may be redundantly stored in the backup storages (120). By redundantly storing copies of data in both the production hosts (130) and the backup storages (120), it may be more likely that the stored data will be able to be retrieved at a future point in time. For example, if a production host *(e.g.,* 130A) suffers a catastrophic failure, the data on the production hosts persistent storage may be lost. However, because the copy of the data may be stored in the backup storages (120), it may be possible to retrieve the data for use after the catastrophic failure. Thus, embodiments of the invention may improve reliability of data storage in a distributed system.

In one or more embodiments of the invention, the production hosts (130) provide multiple types of data storage services to virtual machines, or other entities, hosted by the production hosts (130). For example, the production hosts (130) may provide virtualized disk services to hosted entities. In another example, the production hosts (130) may provide physical disk services to hosted entities. The physical disk services may be, for example, a raw device mapping that enables hosted entities direct access to physical disks. In contrast, the virtualized disk services may only provide logical access to storage resources.

In one or more embodiments of the invention, production hosts (130) that provide backup services for both virtualized disks and physical disks. In contrast, traditional distributed systems may only provide backup services for virtualized disks. Thus, embodiments of the invention may provide a new class of storage services for physical disks that are not provided by contemporary distributed systems.

In one or more embodiments of the invention, production hosts (130) perform backup services under the direction of the remote agents (110). For example, remote agents (110) may send instructions to the production hosts (130) regarding the performance of backup services. In response to receipt of the instructions, the production hosts (130) may act to perform backup services in compliance with the received instructions.

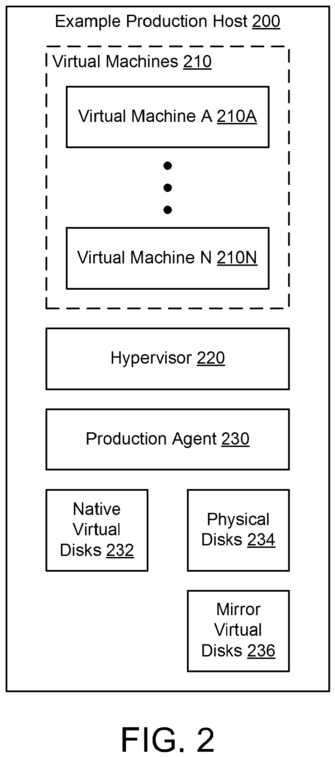

For additional details regarding the production hosts (130), refer to FIG. 2.

In one or more embodiments of the invention, the backup storages (120) are computing devices. The computing devices may be, for example, mobile phones, tablet computers, laptop computers, desktop computers, servers, distributed computing systems, or a cloud resource. The computing devices may include one or more processors, memory *(e.g.,* random access memory), and persistent storage *(e.g.,* disk drives, solid state drives, etc.). The persistent storage may store computer instructions, e.g., computer code, that when executed by the processor(s) of the computing device that cause the computing device to provide the functionality of the backup storages (120) described through this application and all, or a portion, of the methods illustrated in FIG. 5.1 - 5.3. The backup storages (120) may be other types of computing devices without departing from the invention. For additional details regarding computing devices, refer to FIG. 7.

In one or more embodiments of the invention, the backup storages (120) are distributed computing devices. As used herein, a distributed computing device refers to functionality provided by a logical device that utilizes the computing resources of one or more separate and/or distinct computing devices. For example, in one or more embodiments of the invention, the backup storages (120) may be distributed devices that include components distributed across any number of separate and/or distinct computing devices. In such a scenario, the functionality of the backup storages (120) may be performed by multiple, different computing devices without departing from the invention.

In one or more embodiments of the invention, the backup storages (120) provide data storage services to the production hosts (130). The data storage services may include storing of data provided by the production hosts (130) and providing of previously stored data to the production hosts (130). The system may include any number of backup storages (*e.g*., 120A, 120N) without departing from the invention. For example, the system in accordance with embodiments of the invention may only include a single backup storage (*e.g.*, 120A) or may include multiple backup storages *(e.g.,* 120A, 120N).

In one or more embodiments of the invention, the data stored by the backup storages (120) includes backups of virtual machines and/or applications hosted by the production hosts (130). For example, the production hosts (130) may host a virtual machine that hosts a database application. To generate a backup for the database, a backup of the virtual machine hosting the database may be generated and sent to the backup storages (120) for storage. At a future point in time, it may become desirable to restore the state of the database managed by the database application to a previous state. To do so, the previously stored backup of the virtual machine stored in the backup storages (120) may be retrieved. The retrieved backup may be used to restore virtual machine hosting the database to a state associated with the backup, *i.e.,* the desired previous state.

Additionally, application level backups may be stored in backup storage (120), rather than virtual machine level backups. Thus, backups of the production hosts (130) may be generated at any level of granularity with respect to the data stored in the production hosts (130).

While described above as storing backups of virtual machines, applications, and/or production hosts (130), the backup storages (120) may store other types of data from the production hosts (130), or other entities, without departing from the invention. For example, the backup storages (120) may store archives or other data from the clients (140) or other entities.

In one or more embodiments of the invention, the remote agents (110) are computing devices. The computing devices may be, for example, mobile phones, tablet computers, laptop computers, desktop computers, servers, distributed computing systems, or a cloud resource. The computing devices may include one or more processors, memory *(e.g.,* random access memory), and persistent storage *(e.g.,* disk drives, solid state drives, etc.). The persistent storage may store computer instructions, e.g., computer codc, that when executed by the proccssor(s) of the computing device that cause the computing device to provide the functionality of the remote agents (110) described through this application and all, or a portion, of the methods illustrated in FIG. 5.1 - 5.3. The remote agents (110) may be other types of computing devices without departing from the invention. For additional details regarding computing devices, refer to FIG. 7.

In one or more embodiments of the invention, the remote agents (110) are distributed computing devices. As used herein, a distributed computing device refers to functionality provided by a logical device that utilizes the computing resources of one or more separate and/or distinct computing devices. For example, in one or more embodiments of the invention, the remote agents (110) may be distributed devices that include components distributed across any number of separate and/or distinct computing devices. In such a scenario, the functionality of the remote agents (110) may be performed by multiple, different computing devices without departing from the invention.

In one or more embodiments of the invention, the remote agents (110) orchestrate provisioning of backup services to the production hosts (130). For example, the remote agents (110) may initiate the process of backup generation for the production hosts (130) and storage of the generated backups in the backup storages (120). Additionally, the remote agents (110) may orchestrate restoration of the production hosts (130) using backups stored in the backup storages (120). For example, remote agents (110) may initiate copying of backups from the backup storages to the production hosts and initiation of restoration using the copied backups. The system of FIG. 1 may include any number of remote agents (*e.g.*, 110A, 110N).

In one or more embodiments of the invention, the remote agents (110) provision backup generation services by sending instructions to other entities of the distributed system to orchestrate the provisioning of backup services to the production hosts (130). For example, the remote agents (110) may send messages that include instructions or actions to be formed by the other components of the system of FIG. 1. The instructions may be, for example, when to generate a backup, where to store the backup, when to perform a restoration, and/or which backups performing the restoration. The instructions may specify other actions to be taken without departing from the invention. The other components of the system of FIG. 1 may be programmed to perform the actions specified by the instructions and/or provide predetermined information to the remote agents (110) in response to receipt of instructions.

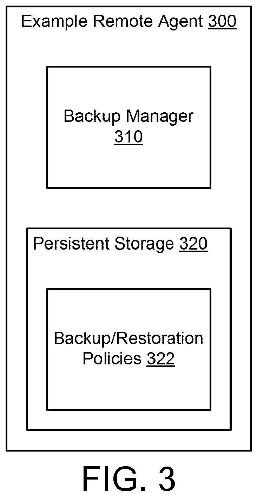

In one or more embodiments of the invention, the remote agents (110) may orchestrate provisioning of backup services to the production hosts (130) based on policies stored in the persistent storage. The policies may specify the steps for generating backups and performing restorations using the backups. Additionally, the policies may specify when backups are to be generated, where the generated backups are to be stored, and the retention time for generated backups. The policies may specify additional information regarding the lifecycle and/or use of backups without departing from the invention. For additional details regarding the remote agents (110), refer to FIG. 3.

While the system of FIG. 1 has been described and illustrated as including a limited number of components for the sake of brevity, a system in accordance with embodiments of the invention may include additional, fewer, and/or different components than those illustrated in FIG. 1 without departing from the invention.

As discussed above, production hosts may host virtual machines, applications, or other entities that provide services to the clients. FIG. 2.1 shows a diagram of an example production host (200) in accordance with one or more embodiments of the invention. The example production host (200) may be similar to any of the production hosts (130, FIG. 1). As discussed above, the example production hosts (200) may provide: (i) application services to the clients, (ii) data storage services - to the entities that provide application services - using both physical and logical data storages, and/or (iii) backup services to the entities that provide application services.

To provide the aforementioned functionality of the example production host (200), the example production host (200) may include virtual machines (210), a hypervisor (220), a production agent (230), native virtual disks (232), physical disks (234), and mirror virtual disks (236). Each component of the example production host (200) is discussed below.

The virtual machines (210) may be applications. For example, the virtual machines (210) may be applications executing using physical computing resources of the example production host (200). In other words, each of the virtual machines (210) may be implemented as computer instructions stored on a persistent storage that when executed by a processor of the example production host (200) may give rise to the functionality of the respective virtual machine. The example production host (200) may host any number of virtual machines (*e.g*., 210A, 210B) without departing from the invention.

Each of the virtual machines (210) may host any number of applications. The applications may provide application services to clients or other entities. For example, the applications may be database applications, electronic communication applications, file sharing applications, and/or other types of applications. Each of the virtual machines (210) may host any number of applications without departing from the invention.

Each of the applications may perform similar or different functions. For example, a first application may be a database application and a second application may be an electronic communications application. In another example, a first application may be a first instance of a database application and a second application may be a second instance of the database application.

In one or more embodiments of the invention, all, or portion, of the applications provide application services to clients. The provided services may correspond to the type of application of each of the applications. When providing application services to the clients, data that is relevant to the clients may be received by and/or generated by the applications. The applications may store such relevant data as part of the application data associated with respective applications in a storage resource such as, for example, the native virtual disks (232), the physical disks (234), or the mirror virtual disks (236).

In some embodiments of the invention, portions, or all, of the application data may be stored remotely from the example production host (200). For example, the application data may be stored in a second production host, or another entity, that does not host the applications. The application data may be stored in other locations without departing from the invention.

While the applications have been described above as being hosted by the virtual machines (210), the applications may not be hosted by virtual machines without departing from the invention. For example, the applications may be executing natively on the example production host (200) rather than in a virtualized resource.

The hypervisor (220) may manage execution of the virtual machines (210). The hypervisor (220) may instantiate and/or terminate any of the virtual machines (210). The hypervisor (220) may also allocate computing resources of the example production host (200) to each of the virtual machines (210A, 210N).

For example, the hypervisor (220) may allocate resources of the native virtual disks (232) and/or the physical disks (234) to the virtual machines (210). Any quantity of storage resources of these disks may be allocated in any manner in any scheme among the virtual machines (*e.g.*, 210A, 210N).

While discussed with respect to storage resources, the hypervisor (220) may allocate other types of computing resources to the virtual machines (210), and/or other entities hosted by the example production host (200), without departing from the invention. For example, the hypervisor (220) may allocate processor cycles, memory capacity, memory bandwidth, and/or network communication bandwidth among the virtual machines (210) and/or other entities hosted by the example production host (200).

In one or more embodiments of the invention, the hypervisor (220) is a hardware device including circuitry. The hypervisor (220) may be, for example, a digital signal processor, a field programmable gate array, or an application specific integrated circuit. The hypervisor (220) may be other types of hardware devices without departing from the invention.

In one or more embodiments of the invention, the hypervisor (220) is implemented as computing code stored on a persistent storage that when executed by a processor performs the functionality of the hypervisor (220). The processor may be a hardware processor including circuitry such as, for example, a central processing unit or a microcontroller. The processor may be other types of hardware devices for processing digital information without departing from the invention.

The production agent (230) may locally manage provisioning of backup services to the virtual machines (210). For example, the production agent (230) may orchestrate the generation of backups and storage of the generated backups in backup storage. In one or more embodiments of the invention, the production agent (230) manages the provisioning of backup services the virtual machines (210) by generating mirror virtual disks (236) associated with physical disks (234) of which resources are allocated to the virtual machines (210). As will be discussed below, in one or more embodiments of the invention, it may not be computationally efficient to generate backups of nonvirtualized disks. For example, the underlying structure of the physical disk may not include appropriate metadata to facilitate efficient backup generation. To provide efficient backup services, the production agent (230) may automatically generate mirror virtual disks (236) of physical disks (234) utilized by the virtual machines (210) and generate backups of the mirror virtual disks (236) to efficiently generate backups of the physical disks (234). By doing so, embodiments of the invention may provide efficient backup generation services for entities that utilize physical disks when compared to contemporary methods for provisioning of backup services in a mixed disk environment, e.g., an environment where physical disks are utilized by to-be-backed up entities such as virtual machines.

To provision backup services, the production agent (230) may include functionality to (i) generate backups of the virtual machines (210) by (ii) generating backups of native virtual disks (232) utilized by the virtual machines (210) and backups of physical disks (234) utilized by the virtual machines (210). The generate backups of the physical disks (234), the production agent (230) include functionality to instantiate mirror virtual disks (236) associated with the physical disk (234). By doing so, the production agent (230) may generate a backup of the physical disk using a mirror virtual disk associated with the physical disk rather than attempting to generate a mirror of the physical disk itself. Additionally, the production agent (230) may include functionality to store generated backups in backup storage backup storage. The backup storage may be remote from the example production host (200).

In addition to backup generation, the provisioning of backup services provided by the production agent (230) may include performing restorations of the virtual machines (210) utilizing previously generated backups. Performing a restoration of a virtual machine may revert a state of the virtual machine to a prior state associated with the backups used during the restoration. Thus, embodiments of the invention may improve the integrity of application data because the application data, if corrupted or lost, may be restored so long as appropriate backups have been generated. Accordingly, embodiments of the invention may improve data integrity in a distributed system by improving the likelihood that application data may be able to be restored by providing an efficient mechanism for generating backups of physical disks (234).

To provide the above noted functionality of the production agent (230), the production agent (230) may perform all, or portion, of the methods illustrated in FIGs. 5.1 - 5.3.

In one or more embodiments of the invention, the production agent (230) is a hardened entity, *i.e.,* not modifiable by an entity that is remote to a production host on which the production agent (230) is executing. In one or more embodiments of the invention, the production agent (230) is not configurable by modifying settings or associated configuration files via a remote terminal or other configuration utility.

In one or more embodiments of the invention, the production agent (230) is a hardware device including circuitry. The production agent (230) may be, for example, digital signal processor, a field programmable gate array, or an application specific integrated circuit. The production agent (230) may be other types of hardware devices without departing from the invention.

In one or more embodiments of the invention, the production agent (230) is implemented as computing code stored on a persistent storage that when executed by a processor performs the functionality of the production agent (230). The processor may be hardware processor including circuitry such as, for example, a central processing unit or a microcontroller. The processor may be other types of hardware devices for processing digital information without departing from the invention.

The native virtual disks (232) may be logical storage resources. For example, the native virtual disks (232) may be logical storage resources that utilize the physical computing resources of the example production host (200) to provide data storage services to entities hosted by the example production host (200). The native virtual disks (232) may provide data storage services to the virtual machines (210).

In one or more embodiments of the invention, the native virtual disks (232) are allocated for the purposes of providing data storage services to the virtual machines (210) and/or other entities. For example, the native virtual disks (232) may be set up by a network administrator, or other entity, as part of a configuration of the example production host (200).

The physical disks (234) may be physical devices that provide data storage services to the virtual machines (210) and/or other entities. For example, the physical disks (234) may be hard disk drives, solid-state disk drives, tape drives, or any other type and/or combination of persistent storage that may provide data storage services.

In one or more embodiments of the invention, at least a portion of the physical disks (234) are mapped directly for providing of data storage services to the virtual machines (210). For example, the virtual machines (210) may directly store data in the physical disks (234) rather than through a virtualized resource that utilizes the physical resources of the physical disks (234). By doing so, the virtual machines (210) may store application data in the physical disks (234). As noted above, generate backups of the physical disks (234) may be substantially less computing resource efficient, or may not be possible, when compared to generating backups of virtualized resources such as, for example, the native virtual disks (232) and/or the mirror virtual disks (236).

The mirror virtual disks (236) may be logical resources similar to the native virtual disks (232). However, the mirror virtual disks (236) may be instantiated for the purposes of mirroring data in the physical disks (234) rather than for providing data storage services to the virtual machines (210).

In one or more embodiments of the invention, the mirror virtual disks (236) are instantiated by production agent (230). For example, the mirror virtual disks (236) may be instantiated by the production agent (230) when a backup of a virtual machine that utilizes one of the physical disks is to be generated. After instantiation, the mirror virtual disks (236) may continue to exist.

In one or more embodiments of the invention, the production agent (230) generates backups of the mirror virtual disks (236) rather than the physical disks (234). For example, when a backup of one of the physical disks (234) is to be generated, a backup of a corresponding mirror virtual disk may be generated.

After a mirror virtual disk for a physical disk is generated, the mirror virtual disk is treated as the primary disk rather than the corresponding physical disk. In other words, once a mirror virtual disk is generated, for backup efficiency purposes, the mirror virtual disk is mapped as a primary disk. The corresponding physical disk is mapped as a secondary disk.

While the example production host (200) of FIG. 2 has been described and illustrated as including a limited number of components for the sake of brevity, a production host in accordance with embodiments of the invention may include additional, fewer, and/or different components than those illustrated in FIG. 2 without departing from the invention.

As discussed above, production hosts may provision backup services under the direction of remote agents. FIG. 3 shows a diagram of an example remote agent (300) in accordance with one or more embodiments of the invention. The example remote agent (300) may be similar to any of the remote agents (110, FIG. 1). As discussed above, the example remote agent (300) may orchestrate performance of backups and/or restorations within a distributed environment.

To provide the aforementioned functionality of the example remote agent (300), the example remote agent (300) may include a backup manager (310) and a persistent storage (320). Each component of the example production host (200) is discussed below.

In one or more embodiments of the invention, the backup manager (310) orchestrates the performance of restorations and/or backup generation within a distributed system. For example, the backup manager (310) may send instructions to any number of components of the distributed system. The backup manager (310) may send such instructions based on backup/restoration policies (322) stored in the persistent storage (320).

In one or more embodiments of the invention, the backup manager (310) is a hardware device including circuitry. The backup manager (310) may be, for example, digital signal processor, a field programmable gate array, or an application specific integrated circuit. The backup manager (310) may be other types of hardware devices without departing from the invention.

In one or more embodiments of the invention, the backup manager (310) is implemented as computing code stored on a persistent storage that when executed by a processor performs the functionality of the backup manager (310). The processor may be hardware processor including circuitry such as, for example, a central processing unit or a microcontroller. The processor may be other types of hardware devices for processing digital information without departing from the invention.

In one or more embodiments of the invention, the persistent storage (320) is a data storage device. For example, the persistent storage (320) may be any combination of hard disk drives, solid state disk drives, tape drives, and/or any other physical storage medium for the storage of data.

In one or more embodiments of the invention, the persistent storage (320) stores backup/restoration policies (322). These policies may be data structures that specify workflows to perform restorations and/or generate backups. Each of the policies may be associated with production hosts and/or entities hosted by the production hosts. For example, a policy may be associated with a virtual machine hosted by a production host. The backup/restoration policies (322) may include any number of policies without departing from the invention.

In one or more embodiments of the invention, workflows are specified by the policies including any number of actions to be performed in a particular, and/or conditional, order. For example, a workflow for performing a backup may include an instruction to place a virtual machine the predetermined state, generate a backup of the virtual machine while in the predetermined state, and to store the generated backup in a particular backup storage. The workflows may include any number in combination of actions without departing from the invention.

While the example remote agent (300) of FIG. 3 has been described and illustrated as including a limited number of components for the sake of brevity, a remote agent in accordance with embodiments of the invention may include additional, fewer, and/or different components than those illustrated in FIG. 3 without departing from the invention.

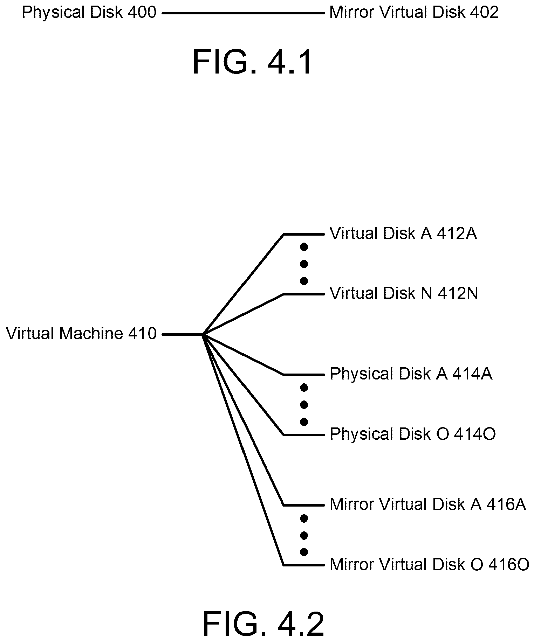

To further clarify aspects of embodiments of the invention, relationship diagrams in accordance with embodiments of the invention are illustrated in FIGs. 4.1 - 4.2.

FIG. 4.1 shows a diagram of a relationship between a physical disk and a mirror virtual disk in accordance with embodiments of the invention. As seen in FIG. 4.1, each mirror virtual disk *(e.g.,* 402) may be associated with a corresponding physical disk (400). For example, as described above, a mirror virtual disk (402) may be instantiated with respect to a physical disk to improve the efficiency a backup generation for the physical disk. In other words, each mirror virtual disk may be associated with the physical disk and include the same data as the physical disk. Thus, a mirror virtual disk may include data that mirrors the data stored in a corresponding physical disk.

FIG. 4.2 shows a diagram of a relationship between a virtual machine and various disks associated with the virtual machine in accordance with one or more embodiments of the invention. As seen in FIG. 4.2, a virtual machine (410) may be associated with any number of virtual disks *(e.g.,* 412A, 412N), any number of physical disks (*e.g.,* 414A, 4140), and any number of mirror disks (416A, 4160). For example, a virtual machine (410) may be associated with virtual disks (412A, 412N), physical disks (414A, 4140), and/or mirror virtual disks (416A, 4160). In one or more embodiments of the invention, there may be a mirror disk for each physical disk. In other words, a mirror disk may be instantiated for each physical disk. By doing so, embodiments of the invention may provide a method for generating backups of physical disks using mirror virtual disks that improves the efficiency a backup generation.

Returning to FIG. 1, the system may provide efficient provisioning of backup services to production agents. FIGs. 5.1 - 5.3 illustrate methods may be performed by components of the system of FIG. 1 when provisioning of backup services.

FIG. 5.1 shows a flowchart of a method in accordance with one or more embodiments of the invention. The method depicted in FIG. 5.1 may be used to provision backup services in accordance with one or more embodiments of the invention. The method shown in FIG. 5.1 may be performed by, for example, a production host *(e.g.,* 130, FIG. 1). Other components of the system illustrated in FIG. 1 may perform all, or a portion, of the method of FIG. 5.1 without departing from the invention.

In step 500, a backup generation request is obtained.

In one or more embodiments of the invention, the backup generation request is obtained from a remote agent. For example, the remote agent may send an instruction to a production host to generate a backup. The remote agent may send the instruction the production host based on a policy associated with the production host. For example, the policy may specify that a backup is to be generated at a particular point in time.

In step 501, it is determined whether the backup generation request impacts a physical disk.

A backup generation request may impact physical disk if the physical disk is utilized by an entity specified by the backup generation request. For example, the backup generation request may specify that a backup be generated for a particular entity. If the identified entity utilizes the physical disk for data storage, the physical disk is impacted. Thus, entity (or multiple specified entities) specified by the backup generation request may be analyzed to identify which disks the entity utilizes for data storage purposes. If the entity utilizes physical disks for data storage purposes, the physical disks are identified as being impacted.

If the backup generation request impacts a physical disk, the method proceeds to step 502. If the backup generation request does not impact any physical disks, the method proceeds to step 503.

In step 502, a mirror virtual disk for the physical disk is generated.

In one or more embodiments of the invention, the mirror virtual disk is generated by instantiating a virtualized storage. After instantiation, the virtualized storage may be populated with data corresponding to the data hosted by the physical disk. In other words, a copy of the data in the physical disk is stored in the mirror virtual disk.

The mirror virtual disk is mapped as the primary disk and the physical disk is mapped as a secondary disk after the mirror disk is generated. By doing so, the mirror virtual disk may be utilized for the primary storage and the physical disk may be used for redundancy purposes rather than primary storage.

In one or more embodiments of the invention, the mirror virtual disk for the physical disk is generated via the method illustrated in FIG. 4.2. The mirror virtual disk for the physical disk may be generated via other methods without departing from the invention.

In step 504, a backup of the mirror disk is generated as a backup of the physical disk.

In one or more embodiments of the invention, generating the backup of the mirror disk as the backup of the physical disk is performed by identifying changes to the mirror disk over a predetermined period of time. For example, the predetermined period of time may be since a backup for the physical disk was previously generated. The generated backup may include the identified changes.

In one or more embodiments of the invention, during the backup of the mirror virtual disk as the backup of the physical disk is performed by generating an image of the mirror virtual disk.

In one or more embodiments of the invention, the backup of the mirror virtual disk is a data structure that includes data may be used for restoration purposes. The backup of the mirror virtual disk may be associated with the period of time. The backup of the mirror virtual disk may be used as the backup of the physical disk.

In step 506, the backup of the mirror virtual disk is stored in backup storage.

In one or more embodiments of the invention, storing the backup of the mirror virtual disk associates a backup with an entity specified by the backup generation request received in step 500. For example, any number of backups may be stored in backup storage that are each associated with the entity. Any number of these backups may be used in combination, or isolation, to perform restorations of the entity. The number in combination of backups may be selected to restore a state of the entity to a desired state. For example, different combinations of backups may be usable to restore the state of the entity to different desired states.

In step 508, writes to the physical disk are mirrored to the mirror virtual disk after the mirror of the virtual disk is generated.

The writes are mirrored by mapping the mirror virtual disk as a primary disk and mapping the physical disk as a secondary disk. The writes are primarily directed toward the mirror virtual disk and redundantly directed towards the secondary disk.

The method may end following step 508.

Returning to step 501, the method may proceed to step 503 if the backup generation request does not impact a physical disk.

In step 503, a backup of a native virtual disk is generated without generating any mirror virtual disks.

In one or more embodiments of the invention, the backup of the native virtual disk is generated in the same manner as described with respect to the backup of the mirror virtual disk discussed in step 504.

The method may end following step 503.

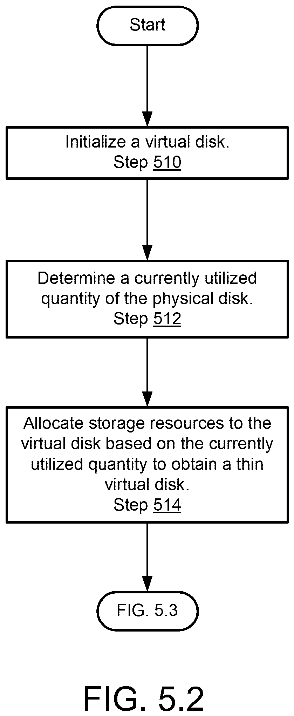

FIG. 5.2 shows a flowchart of a method in accordance with one or more embodiments of the invention. The method depicted in FIG. 5.2 may be used to generate a mirror virtual disk in accordance with one or more embodiments of the invention. The method shown in FIG. 5.2 may be performed by, for example, a production host *(e.g.,* 130, FIG. 1). Other components of the system illustrated in FIG. 1 may perform all, or a portion, of the method of FIG. 5.2 without departing from the invention.

In step 510, a virtual disk is initialized.

In one or more embodiments of the invention, initializing the virtual disk includes allocating physical computing resources to the virtual disk. For example, storage resources of one or more physical disks may be allocated to the virtual disk. In one or more embodiments of the invention, the physical computing resources are dynamically allocated to the virtual disk. For example, the virtual disk may be set up to enable storage resources to be added to the computing resources of the virtual disk over time. By doing so, only a minimum quantity of computing resources may be allocated to the virtual disk at any point in time. For example, the virtual disk may only include quantity of computing resources proportional to the quantity of computing resources of the physical disk that are in use for storing of data. In other words, computing resources may not be allocated to the virtual disk to be the same total size of the physical disk. Rather, the size of the virtual disk may correspond only to the quantity of computing resources of the physical disk that are currently in use for storing data.

In one or more embodiments of the invention, initializing the virtual disk includes assigning an identifier to the virtual disk. The identifier may uniquely identify the virtual disk within the logical disk environment.

In step 512, a currently utilized quantity of the physical disk is determined.

In one or more embodiments of the invention, the utilized quantity of the physical disk is determined by identifying a total size of the physical disk the amount data stored in the physical disk. Amount of data stored in the physical disk may be used as a currently utilized quantity of the physical disk.

In step 514, storage resources are allocated to the virtual disk based on the currently utilized quantity to obtain a thin virtual disk.

In one or more embodiments of the invention, a thin virtual disk is a storage resource that only includes storage resources proportional to a quantity of used storage resources of another disk. For example, a physical disk may include 100 GB of storage capacity and a virtual machine to which the physical disk is allocated may only utilize 25 GB of the storage capacity. In this example, a thin disk may only be allocated 25 GB of storage capacity to match that of the used storage capacity of the physical disk.

In one or more embodiments of the invention, the storage resources are allocated to the virtual disk by sending a request to a hypervisor. In response, the hypervisor may assign computing resources to the virtual disk based on the request.

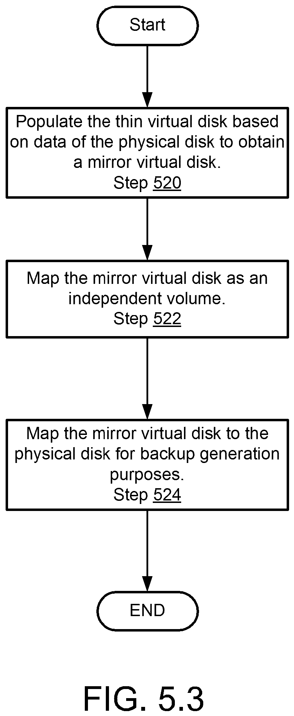

The method may proceed to the flowchart in FIG. 5.3 following step 514.

FIG. 5.3 shows a flowchart of a continuation of the method illustrated in FIG. 5.2 in accordance with one or more embodiments of the invention.

In step 520, the thin virtual disk is populated based on data of the physical disk to obtain a mirror virtual disk.

In one or more embodiments of the invention, the thin virtual disk is populated by making a copy of the data stored in the physical disk in the thin virtual disk. By doing so, the data in the thin virtual disk may mirror the data in the physical disk.

In step 522, the mirror virtual disk is mapped as an independent volume from the physical disk.

In one or more embodiments of the invention, the mirror virtual disk is mapped as an independent volume by assigning a logical identifier to the mirror virtual disk that is separate from an identifier of the physical disk. For example, the mirror virtual disk may be assigned a drive letter in a drive-based storage architecture. Different types of identifiers to be assigned to the mirror virtual disk without departing from the invention.

In step 524, the mirror virtual disk is mapped to the physical disk for backup generation purposes.

In one or more embodiments of the invention, the mirror virtual disk may be mapped by sending a notification to a production agent that hosts an entity that utilizes the physical disk. The notification may specify this mapping. In response to receiving the notification, the production agent update mapping tables or other data structures that specify which disks to generate backups of for backup generation purposes. By doing so, when backups for the entity is generated in the future, backups of the mirror virtual disk are generated and used as backups of the physical disk.

The method may end following step 524.

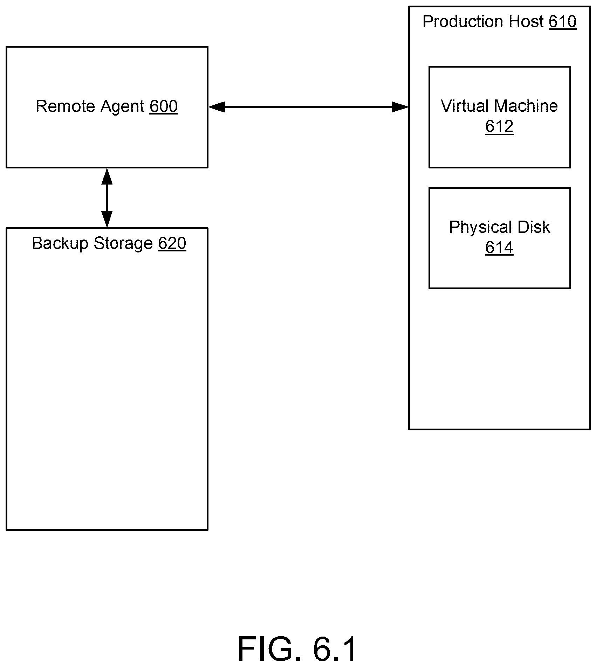

To further clarify aspects of embodiments of the invention, a non-limiting example is illustrated in FIGs. 6.1 - 6.4. Each of these figures may illustrate a system similar to that illustrated in FIG. 1 at different points in time during a backup generation process.

### Example

Consider a scenario has illustrated in FIG. 6.1 in which a remote agent (600) is managing the generation and storage of backups of a production host (610) and backup storage. The production host (610) may host a virtual machine (612) that provides services to clients (not shown).

The virtual machine (612) may utilize a physical disk (614) of the production host (610). In other words, the virtual machine (612) may be assigned a logical volume that maps directly to the physical disk rather than virtual resources of physical disks.

At a first point in time, the remote agent (600) obtains a request for generation of a backup of the virtual machine (612). The remote agent (600) obtains the request based on a backup policy for the virtual machine (612). The backup policy specifies that a backup of the virtual machine (612) is to be generated at the first point in time.

In response to obtaining the request, the remote agent (600) sends an instruction to a production agent (not shown) hosted by the production host (610) to generate a backup of the virtual machine.

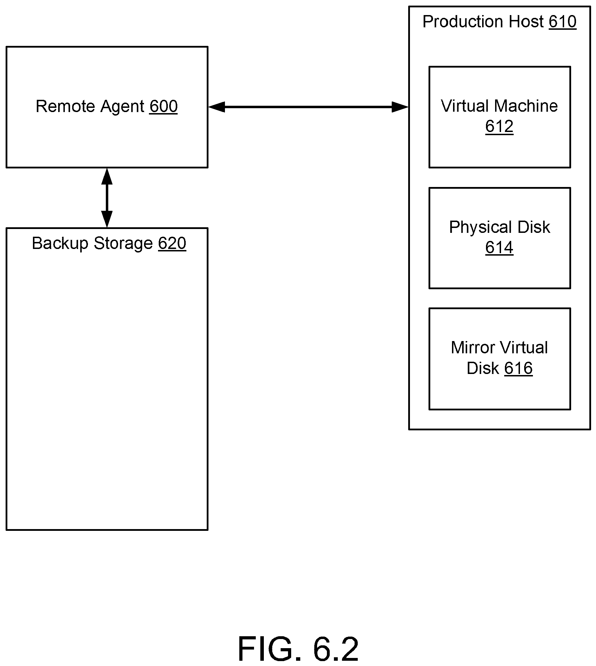

In response to obtaining the request, the production agent identifies that the virtual machine (612) is utilizing a physical disk rather than a virtual disk. In response to the determination, the production agent generates a mirror virtual disk (616) as illustrated in FIG. 6.2.

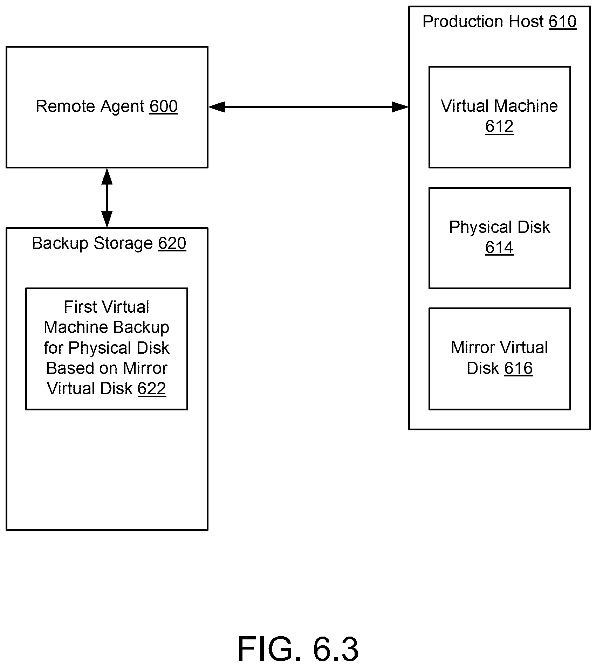

After generating the mirror virtual disk (616), the production host (610) generates a first virtual machine backup for the physical disk based on the mirror virtual disk (622) as illustrated in FIG. 6.3. The first virtual machine backup for the physical disk based on the mirror virtual disk (622) is stored in the backup storage (620). By doing so, it is more likely that the data of the virtual machine (612) may be retrieved in the future when compared to scenarios in which a backup is not stored in a backup storage that is remote from the production host.

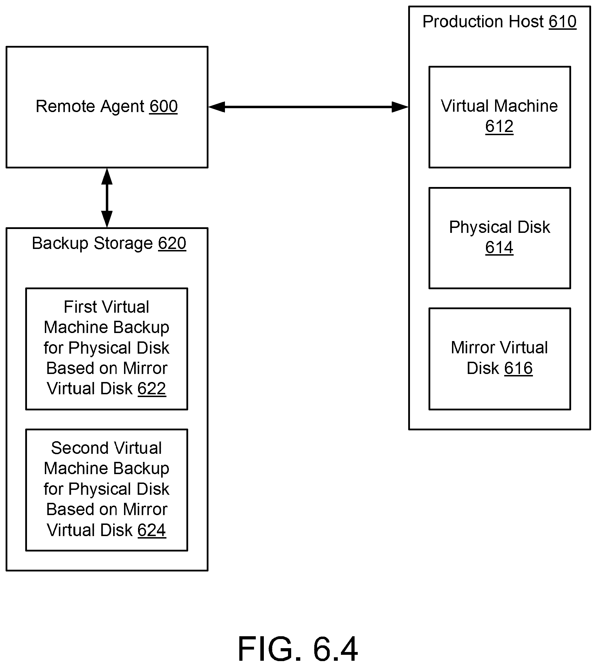

After storing the first virtual machine backup for the physical disk based on the mirror virtual disk (622) in the backup storage (620), the remote agent (600) sends a second backup generation request for the virtual machine (612). Because the mirror virtual disk (616) has already been generated, the remote agent (600) generates a second virtual machine backup for the physical disk based on the mirror virtual disk (624) as illustrated in FIG. 6.4. Thus, the production agent of the production host (610) may not generate additional mirror virtual disks for the physical disk (614) to generate subsequent backups after the mirror virtual disk (616) is generated.

### End of Example

Any of the components of FIG. 1 may be implemented as distributed computing devices. As used herein, a distributed computing device refers to functionality provided by a logical device that utilizes the computing resources of one or more separate and/or distinct computing devices. As discussed above, embodiments of the invention may be implemented using computing devices. FIG. 7 shows a diagram of a computing device in accordance with one or more embodiments of the invention. The computing device (700) may include one or more computer processors (702), non-persistent storage (704) (e.g., volatile memory, such as random access memory (RAM), cache memory), persistent storage (706) (e.g., a hard disk, an optical drive such as a compact disk (CD) drive or digital versatile disk (DVD) drive, a flash memory, etc.), a communication interface (712) (e.g., Bluetooth interface, infrared interface, network interface, optical interface, etc.), input devices (710), output devices (708), and numerous other elements (not shown) and functionalities. Each of these components is described below.

In one embodiment of the invention, the computer processor(s) (702) may be an integrated circuit for processing instructions. For example, the computer processor(s) may be one or more cores or micro-cores of a processor. The computing device (700) may also include one or more input devices (710), such as a touchscreen, keyboard, mouse, microphone, touchpad, electronic pen, or any other type of input device. Further, the communication interface (712) may include an integrated circuit for connecting the computing device (700) to a network (not shown) (e.g., a local area network (LAN), a wide area network (WAN) such as the Internet, mobile network, or any other type of network) and/or to another device, such as another computing device.

In one embodiment of the invention, the computing device (700) may include one or more output devices (708), such as a screen (e.g., a liquid crystal display (LCD), a plasma display, touchscreen, cathode ray tube (CRT) monitor, projector, or other display device), a printer, external storage, or any other output device. One or more of the output devices may be the same or different from the input device(s). The input and output device(s) may be locally or remotely connected to the computer processor(s) (702), non-persistent storage (704), and persistent storage (706). Many different types of computing devices exist, and the aforementioned input and output device(s) may take other forms.

Embodiments of the invention may provide an improved method for providing backup services within a distributed environment. For example, embodiments of the invention may provide a method for generation of backups of applications that utilize physical disks. The method may include generation of virtualized storage resources that mirror those of the physical disk utilized the applications. When a backup generation for the application is being performed, backups of the physical disk may be generated based on the mirror virtual disk rather than the physical disk. By doing so, the efficiency a backup generation of the distributed system may be improved when compared to contemporary systems that do not automatically generate mirrored virtualized disks.

Thus, embodiments of the invention may address problems that arise due to the technological environment of distributed systems that utilize multiple types of all physical and virtualized disks. Further, embodiments of the invention may provide a unified method for backing up both physical and virtualized disks. By doing so, embodiments of the invention may provide architecture agnostic solution to this problem.

The problems discussed above should be understood as being examples of problems solved by embodiments of the invention disclosed herein and the invention should not be limited to solving the same/similar problems. The disclosed invention is broadly applicable to address a range of problems beyond those discussed herein.

One or more embodiments of the invention may be implemented using instructions executed by one or more processors of the data management device. Further, such instructions may correspond to computer readable instructions that are stored on one or more non-transitory computer readable mediums.

While the invention has been described above with respect to a limited number of embodiments, those skilled in the art, having the benefit of this disclosure, will appreciate that other embodiments can be devised which do not depart from the scope of the invention as disclosed herein. Accordingly, the scope of the invention should be limited only by the attached claims.

## Claims

1. A method for managing virtual machines (210) hosted on a production host (130; 200; 610), comprising:
obtaining (500) a backup generation request for a virtual machine (410; 612) of the virtual machines;
making (501) a first determination that the backup generation request impacts a physical disk (234; 400; 414A - 4140; 614) utilized by the virtual machine;
in response to the first determination:
generating (502) a mirror virtual disk (236; 402; 416A - 4160; 616) for the physical disk, wherein the mirror virtual disk comprises a virtual disk mirroring data of the physical disk but is implemented as a logical disk;
generating (504) a backup (622) of the mirror virtual disk as a backup of the physical disk; and
storing (506) the backup of the mirror virtual disk in backup storage (120); and after generating the mirror virtual disk:
mapping the mirror virtual disk as a primary disk, wherein the primary disk is used as primary storage for writes; and
mapping the physical disk as a secondary disk, wherein the secondary disk is used for redundancy storage for the writes.

2. The method of claim 1, further comprising:
obtaining (500) a second backup generation request;
making (501) a second determination that the second backup generation request impacts the physical disk (234; 400; 414A - 4140; 614);
in response to the second determination:
generating (504) a second backup (624) of the mirror virtual disk (236; 402; 416A - 4160; 616) as a second backup of the physical disk; and
storing (506) the second backup of the mirror virtual disk in the backup storage.

3. The method of any preceding claim, wherein the backup generation request specifies that a backup of the virtual machine (410; 612) is to be generated.

4. The method of any preceding claim, wherein generating (502) the mirror virtual disk (236; 402; 416A - 4160; 616) for the physical disk (234; 400; 414A - 4140; 614) comprises:
initializing (510) a virtual disk;
determining (512) a currently utilized quantity of the physical disk; and
allocating (514) storage resources to the virtual disk based on the currently utilized quantity to obtain a thin virtual disk.

5. The method of claim 4, wherein the thin virtual disk comprises fewer storage resources than the physical disk (234; 400; 414A - 4140; 614).

6. The method of claim 4 or claim 5, wherein generating (502) the mirror virtual disk (236; 402; 416A - 4160; 616) for the physical disk (234; 400; 414A - 4140; 614) further comprises:
populating (520) the thin virtual disk based on data of the physical disk to obtain a mirror virtual disk;
mapping (522) the mirror virtual disk as an independent volume from the physical disk; and
generating backups (622, 624) of and using the backups of the mirror virtual disk as backups of the physical disk.

7. The method of any preceding claim, wherein a native virtual disk (232) is utilized by a second virtual machine of the virtual machines (210), the native virtual disk being a logical storage resource that utilizes the physical computing resources of the production host (200) to provide data storage services to the virtual machines and wherein the method further comprises:
obtaining (500) a second backup generation request for the second virtual machine;
making (501) a second determination that the second backup generation request does not impact any physical disk if the second virtual machine does not utilize any physical disk; and
in response to the second determination:
generating (503) a backup for the second virtual machine using the native virtual disk without generating any mirror virtual disks.

8. A production host (130; 200; 610) configured to host virtual machines (210), comprising:
a physical disk (234; 614) utilized by a virtual machine (410; 612); of the virtual machines;
a backup agent programmed to perform a method as set out in at least one of claims 1 to 7.

9. A computer program comprising computer readable program code which, when executed by a computer processor (702), causes the computer processor to perform a method for managing virtual machines as set out in at least one of claims 1 to 7.

## Patentansprüche

1. Verfahren zum Verwalten von virtuellen Maschinen (210), welche auf einem Produktions-Host (130; 200; 610) gehostet werden; umfassend:
Abrufen (500) einer Backup-Generierungsanforderung für eine virtuelle Maschine (410; 612) der virtuellen Maschinen;
Durchführen (501) einer ersten Bestimmung, dass die Backup-Generierungsanforderung sich auf ein physikalisches Laufwerk (234; 400; 414A - 414O; 614) auswirkt, welches von der virtuellen Maschine genutzt wird;
als Reaktion auf die erste Bestimmung:
Erzeugen (502) eines gespiegelten virtuellen Laufwerks (236; 402; 416A - 416O; 616) für das physikalische Laufwerk, wobei das gespiegelte virtuellen Laufwerk ein virtuelles Laufwerk umfasst, welches Daten des physikalisches Laufwerks spiegelt, aber als ein logisches Laufwerk implementiert ist;
Erzeugen (504) eines Backups (622) des gespiegelten virtuellen Laufwerks als ein Backup des physikalischen Laufwerks; und
Speichern (506) des Backups des gespiegelten virtuellen Laufwerks im Backup-Speicher (120); und nach Erzeugen des gespiegelten virtuellen Laufwerks:
Zuordnen des gespiegelten virtuellen Laufwerks als ein primäres Laufwerk, wobei das primäre Laufwerk als primärer Speicher für Schreibzugriffe verwendet wird; und
Zuordnen des physikalischen Laufwerks als ein sekundäres Laufwerk, wobei das sekundäre Laufwerk als Redundanzspeicher für die Schreibzugriffe verwendet wird.

2. Verfahren nach Anspruch 1, weiter umfassend:
Abrufen (500) einer zweiten Backup-Generierungsanforderung;
Durchführen (501) einer zweiten Bestimmung, dass die zweite Backup-Generierungsanforderung sich auf das physikalische Laufwerk (234; 400; 414A - 414O; 614) auswirkt;
als Reaktion auf die zweite Bestimmung:
Erzeugen (504) eines zweiten Backups (624) des gespiegelten virtuellen Laufwerks (236; 402; 416A - 416O; 616) als ein zweites Backup des physikalischen Laufwerks; und
Speichern (506) des zweiten Backups des gespiegelten virtuellen Laufwerks in dem Backup-Speicher.

3. Verfahren nach einem der vorstehenden Ansprüche, wobei die Backup-Generierungsanforderung angibt, dass ein Backup der virtuellen Maschine (410; 612) erzeugt werden soll.

4. Verfahren nach einem der vorstehenden Ansprüche, wobei Erzeugen (502) des gespiegelten virtuellen Laufwerks (236; 402; 416A - 416O; 616) für das physikalische Laufwerk (234; 400; 414A - 414O; 614) umfasst:
Initialisieren (510) eines virtuellen Laufwerks;
Bestimmen (512) einer aktuell genutzten Menge des physikalischen Laufwerks; und
Zuweisen (514) von Speicherressourcen an das virtuelle Laufwerk auf Basis der aktuell genutzten Menge, um ein schlankes virtuelles Laufwerk zu erhalten.

5. Verfahren nach Anspruch 4, wobei das schlanke virtuelle Laufwerk weniger Speicherressourcen umfasst als das physikalische Laufwerk (234; 400; 414A - 414O;614).

6. Verfahren nach Anspruch 4 oder Anspruch 5, wobei Erzeugen (502) des gespiegelten virtuellen Laufwerks (236; 402; 416A - 416O; 616) für das physikalische Laufwerk (234; 400; 414A - 414O; 614) weiter umfasst:
Auffüllen (520) des schlanken virtuellen Laufwerks auf Basis von Daten des physikalischen Laufwerks, um ein gespiegeltes virtuelles Laufwerk zu erhalten;
Zuordnen (522) des gespiegelten virtuellen Laufwerks als einen von dem physikalischen Laufwerk unabhängigen Datenträger; und
Erzeugen von Backups (622; 624) und Verwenden der Backups des gespiegelten virtuellen Laufwerks als Backups des physikalischen Laufwerks.

7. Verfahren nach einem der vorstehenden Ansprüche, wobei ein natives virtuelles Laufwerk (232) von einer zweiten virtuellen Maschine der virtuellen Maschinen (210) genutzt wird, wobei das native virtuelle Laufwerk eine logische Speicherressource ist, welche die physikalischen Rechenressourcen des Produktions-Hosts (200) nutzt, um Datenspeicherdienste für die virtuellen Maschinen bereitzustellen, und wobei das Verfahren weiter umfasst:
Abrufen (500) einer zweiten Backup-Generierungsanforderung für die zweite virtuelle Maschine;
Durchführen (501) einer zweiten Bestimmung, dass die zweite Backup-Generierungsanforderung sich auf kein physikalisches Laufwerk auswirkt, wenn die zweite virtuelle Maschine kein physikalisches Laufwerk nutzt; und
als Reaktion auf die zweite Bestimmung:
Erzeugen (503) eines Backups für die zweite virtuelle Maschine unter Verwendung des nativen virtuellen Laufwerks ohne Erzeugen von gespiegelten virtuellen Laufwerken.

8. Produktions-Host (130; 200; 610), welcher konfiguriert ist, um virtuelle Maschinen (210) zu hosten, umfassend:
ein physikalisches Laufwerk (234; 614), welches von einer virtuellen Maschine (410; 612) der virtuellen Maschinen genutzt wird;
einen Backup-Agenten, welcher programmiert ist, um ein Verfahren wie in zumindest einem der Ansprüche 1 bis 7 beschrieben auszuführen.

9. Computerprogramm, umfassend computerlesbaren Programmcode, welcher bei Ausführung durch einen Computerprozessor (702) den Computerprozessor veranlasst, ein Verfahren zum Verwalten von virtuellen Maschinen wie in zumindest einem der Ansprüche 1 bis 7 dargelegt auszuführen.

## Revendications

1. Procédé de gestion de machines virtuelles (210) hébergées sur un hôte de production (130 ; 200 ; 610), comprenant :
l'obtention (500) d'une demande de génération de sauvegarde pour une machine virtuelle (410 ; 612) des machines virtuelles ;
la réalisation (501) d'une première détermination que la demande de génération de sauvegarde affecte un disque physique (234 ; 400; 414A-414O ; 614) utilisé par la machine virtuelle ;
en réponse à la première détermination :
la génération (502) d'un disque virtuel miroir (236 ; 402 ; 416A-416O ; 616) pour le disque physique, dans lequel le disque virtuel miroir comprend un disque virtuel mettant en miroir des données du disque physique mais est mis en œuvre comme un disque logique ;
la génération (504) d'une sauvegarde (622) du disque virtuel miroir comme une sauvegarde du disque physique ; et
le stockage (506) de la sauvegarde du disque virtuel miroir dans un dispositif de stockage de sauvegarde (120) ; et après la génération du disque virtuel miroir :
le mappage du disque virtuel miroir comme un disque primaire, dans lequel le disque primaire est utilisé comme un dispositif de stockage primaire pour des écritures ; et
le mappage du disque physique comme un disque secondaire, dans lequel le disque secondaire est utilisé pour un stockage de redondance pour les écritures.

2. Procédé selon la revendication 1, comprenant en outre :
l'obtention (500) d'une seconde demande de génération de sauvegarde ;
la réalisation (501) d'une seconde détermination que la seconde demande de génération de sauvegarde affecte le disque physique (234 ; 400 ; 414A-414O ; 614) ;
en réponse à la deuxième détermination :
la génération (504) d'une seconde sauvegarde (624) du disque virtuel miroir (236 ; 402 ; 416A-416O ; 616) comme une seconde sauvegarde du disque physique ; et
le stockage (506) de la seconde sauvegarde du disque virtuel miroir dans le dispositif de stockage de sauvegarde.

3. Procédé selon n'importe quelle revendication précédente, dans lequel la demande de génération de sauvegarde spécifie qu'une sauvegarde de la machine virtuelle (410 ; 612) doit être générée.

4. Procédé selon n'importe quelle revendication précédente, dans lequel la génération (502) du disque virtuel miroir (236; 402; 416A-416O ; 616) pour le disque physique (234 ; 400 ; 414A-414O ; 614) comprend :
l'initialisation (510) d'un disque virtuel ;
la détermination (512) d'une quantité actuellement utilisée du disque physique ; et
l'attribution (514) de ressources de stockage au disque virtuel sur la base de la quantité actuellement utilisée pour obtenir un disque virtuel mince.

5. Procédé selon la revendication 4, dans lequel le disque virtuel mince comprend moins de ressources de stockage que le disque physique (234 ; 400 ; 414A - 414O ; 614).

6. Procédé selon la revendication 4 ou la revendication 5, dans lequel la génération (502) du disque virtuel miroir (236; 402; 416A-416O ; 616) pour le disque physique (234 ; 400 ; 414A-414O ; 614) comprend en outre :
le remplissage (520) du disque virtuel mince sur la base de données du disque physique pour obtenir un disque virtuel miroir ;
le mappage (522) du disque virtuel miroir comme un volume indépendant par rapport au disque physique ; et
la génération de sauvegardes (622, 624) et l'utilisation des sauvegardes du disque virtuel miroir comme des sauvegardes du disque physique.

7. Procédé selon n'importe quelle revendication précédente, dans lequel un disque virtuel natif (232) est utilisé par une seconde machine virtuelle des machines virtuelles (210), le disque virtuel natif étant une ressource de stockage logique qui utilise les ressources informatiques physiques de l'hôte de production (200) pour fournir des services de stockage de données aux machines virtuelles et dans lequel le procédé comprend en outre :
l'obtention (500) d'une seconde demande de génération de sauvegarde pour la seconde machine virtuelle ;
la réalisation (501) d'une seconde détermination que la seconde demande de génération de sauvegarde n'affecte aucun disque physique si la seconde machine virtuelle n'utilise aucun disque physique ; et
en réponse à la deuxième détermination :
la génération (503) d'une sauvegarde pour la seconde machine virtuelle en utilisant le disque virtuel natif sans la génération de n'importe quels disques virtuels miroirs.

8. Hôte de production (130 ; 200 ; 610) configuré pour des machines virtuelles d'hôte (210), comprenant :
un disque physique (234 ; 614) utilisé par une machine virtuelle (410 ; 612) ; des machines virtuelles ;
un agent de sauvegarde programmé pour effectuer un procédé selon au moins l'une des revendications 1 à 7.

9. Programme informatique comprenant un code de programme lisible sur ordinateur qui, lorsqu'il est exécuté par un processeur informatique (702), amène le processeur informatique à effectuer un procédé de gestion de machines virtuelles selon au moins l'une des revendications 1 à 7.
